# EUROPÄISCHE PATENTSCHRIFT

(11) **EP 0 768 468 B1**
(45) Veröffentlichungstag und Bekanntmachung des Hinweises auf die Patenterteilung: **05.08.1998**
(21) Anmeldenummer: 96116049.6
(22) Anmeldetag: 07.10.1996
(51) Int. Cl.: F16B 5/02

(54) **Vorrichtung zum Verbinden von im Abstand zueinander angeordneten Bauteilen**
Device for connecting spaced components
Dispositif de raccordement d'éléments espacés

(30) Priorität: 14.10.1995 DE 19538378
(43) Veröffentlichungstag der Anmeldung: 16.04.1997
(73) Patentinhaber: BENTELER AG, D-33104 Paderborn (DE)
(72) Erfinder: Streubel, Wolfgang, 32756 Detmold (DE); Klasfauseweh, Udo, 33334 Gütersloh (DE)
(74) Vertreter: Ksoll, Peter, Dr.-Ing.

(56) Entgegenhaltungen:
- EP-A- 0 176 663
- EP-A- 0 268 302
- DE-C- 3 620 005
- DE-C- 4 228 625
- US-A- 3 920 059
- US-A- 4 998 332

## Beschreibung

Die Erfindung betrifft eine Vorrichtung zum Verbinden von im Abstand zueinander anzuordnenden und mit Montageöffnungen versehenen Bauteilen mittels einer Verbindungsschraube und dieser zugeordnetem Widerlager.

Beim abstandsgerechten Verbinden von mit Montageöffnungen versehenen Bauteilen kommen in der Regel Distanzstücke zum Einsatz, die zwischen die zu verbindenden Bauteile eingegliedert sind. Eine solche Vorrichtung zählt durch die EP 0 176 663 A1 zum Stand der Technik. Das Distanzstück ist mit wendelgangförmigen Steigungsflächen ausgestattet. Diesen sind passende Gegensteigungsflächen so zugeordnet, daß sich die Steigungsflächen aufeinander abstützen. Bei der Drehung der Stützflächen zueinander wird das Distanzstück in axialer Richtung ausgerückt. Die Drehbewegung wird über die Verbindungsschraube eingeleitet, wobei das Distanzstück in seine Abstützstellung mitgeschleppt wird.

Die vorstehend beschriebene Bauart hat sich bewährt und wird in der Praxis häufig dann angewandt, wenn zwei Bauteile um ein axiales Maß relativ zueinander bewegt werden sollen. Sie benötigt jedoch eine Reihe von Einzelbauteilen, um den gewünschten Erfolg zu gewährleisten. Die Einzelteile und damit die Gesamtlösung erfordern einen höheren Fertigungsaufwand, der sich negativ auf die Kosten der Vorrichtung auswirkt.

Aus der DE 36 20 005 C1 ist desweiteren eine Vorrichtung zum Einstellen eines ersten Bauteils relativ zu einem zweiten Bauteil bekannt, welche sich einer längenveränderlichen Distanzbuchse bedient. Nachteilig wirkt sich hier aus, daß zunächst die korrekte Länge der Distanzbuchse mit Hilfe eines gesonderten Werkzeugs eingestellt werden muß, bevor das zweite Bauteil montiert und festgelegt werden kann. Stellt sich heraus, daß die Einstellung der Distanzbuchse nicht korrekt gewählt war, ist eine Demontage des zu verbindenden Bauteils und eine Neueinstellung der Distanzbuchse notwendig.

Schließlich zählt durch die US-A-4 998 332 eine Vorrichtung zum Verbinden von im Abstand voneinander anzuordnenden und mit Montageöffnungen versehenen Bauteilen mittels einer Verbindungsschraube zum Stand der Technik. Hierbei wird in eine Vertiefung am zweiten Bauteil ein Distanzstück eingelegt und die beiden Bauteile mittels einer Verbindungsschraube verbunden. Beim Verschrauben wird in die Montageöffnung des zweiten Bauteils ein Gewinde geschnitten. Der Abstand zwischen den beiden Bauteilen ist jedoch durch das Distanzstück vorbestimmt. Für die Verbindung von Bauteilen, die konstruktionsbedingt mit Abstand zueinander liegen, bei denen jedoch der Spalt zwischen den Bauteilen nicht exakt bestimmt ist, ist die bekannte Vorrichtung nicht geeignet.

Der Erfindung liegt ausgehend vom Stand der Technik die Aufgabe zugrunde, eine Vorrichtung zum Verbinden von im Abstand zueinander anzuordnenden Bauteilen auf einfache Weise hinsichtlich Ausführung und Anwendung zu verbessern und damit ökonomischer zu gestalten, wobei auf ein gesondertes einstellbares Distanzstück verzichtet werden kann.

Die Lösung dieser Aufgabe besteht nach der Erfindung in den im kennzeichnenden Teil des Anspruchs 1 aufgeführten Merkmalen.

Danach wird jetzt dem ersten Bauteil ein Führungsstück für die Verbindungsschraube verdrehungssicher zugeordnet. Das Widerlager für die Verbindungsschraube wird am zweiten Bauteil im Zuge der Montage hergestellt, indem die Zylindermantelfläche der Montageöffnung am zweiten Bauteil mit einer schraubenlinienförmigen Profilierung versehen wird. Dazu ist die Verbindungsschraube erfindungsgemäß als selbstformendes Element ausgeführt, das ein Innengewinde an der Montageöffnung des zweiten Bauteils herstellt. Dieses Innengewinde ist spielfrei, mindestens jedoch spielarm ausgebildet.

Das Führungsstück weist ein Innengewinde auf. Auf einfache Weise wird das Führungsstück dann von einer Mutter gebildet, die unter der Montageöffnung des ersten Bauteils angebracht ist. Eine andere alternative Lösung besteht darin, das Führungsstück durch einen Durchzug mit Innengewinde auszubilden. Grundsätzlich ist es möglich, auch das Innengewinde im Führungsstück erst bei der Montage herzustellen.

Durch das Innengewinde ist eine einwandfreie Führung der Verbindungsschraube gewährleistet. Desweiteren stützt sich die Verbindungsschraube an dem Innengewinde zur Kraftübertragung ab. Die Kraftübertragung geschieht dann vom ersten Bauteil über die Verbindungsschraube und das Widerlager in das zweite Bauteil.

Die Erfindung macht sich die Erkenntnis zu eigen, daß insbesondere bei der Verbindung solcher Bauteile, die konstruktionsbedingt mit Abstand zueinander liegen, bei denen jedoch der Spalt zwischen den Bauteilen nicht exakt bestimmt ist bzw. variieren kann, wie beispielsweise bei der Verbindung der A-Säule eines Kraftfahrzeugs mit einem Montageträger, auf ein einstellbares Distanzstück verzichtet werden kann. Der Montagevorgang ist bei der erfindungsgemäßen Vorrichtung dann abgeschlossen, wenn der Kopf der Verbindungsschraube am ersten Bauteil zur Anlage kommt, und zwar unabhängig von dem Spalt, der sich zwischen den Bauteilen ergibt. Die Vorrichtung gewährleistet somit einen automatischen Toleranzausgleich. Ein auf den Abstand einstellbares Distanzstück ist dabei nicht erforderlich.

Die erfindungsgemäße Vorrichtung gewährleistet eine einwandfreie Verbindung der Bauteile, wobei sie in ihrem Aufbau und in ihrer Fertigung einfach gestaltet ist. Sie ist demzufolge bereits bei ihrer Herstellung kostengünstig. Weiterhin bringt die Vorrichtung bei der automatisierten Montage in Fertigungsstraßen erhebliche Vorteile mit sich, so daß der Produktionsablauf rationalisiert werden kann. Darüberhinaus kann mit der erfindungsgemäßen Vorrichtung ein Beitrag zur weiteren Gewichtsreduzierung geleistet werden, da zusätzliche Distanzstücke entfallen.

Durch die Ausbildung des Gewindes der Verbindungsschraube kann sichergestellt werden, daß es trotz der auf die Bauteile wirkenden ruhenden und schwingenden Betriebskräfte nicht zu nennenswerten Relativbewegungen der Bauteile gegeneinander kommt. Die Verbindungsschraube ist vibrationssicher ausgestaltet. Damit wird ein Lösen der Verbindung auch ohne ein Verspannen der Verbindungsschraube unterbunden. Dies kann unterstützt werden durch die entsprechende Wahl der Klemmlänge im Führungsstück und der Lasteinleitungshöhe des Widerlagers am zweiten Bauteil.

Vorteilhaft weist das Gewinde der Verbindungsschraube eine polygonartige Geometrie auf. Durch die Geometrie des Gewindes und dessen Festigkeitseigenschaften entsteht am zweiten Bauteil ein kaltverfestigtes Gegengewinde mit großer Überdeckung als Widerlager, welches eine spielfreie, vibrationsfeste Verbindung gewährleistet.

Nach den Merkmalen des Anspruchs 2 ist das Führungsstück dem ersten Bauteil lagefixiert zugeordnet. Bei dem Führungsstück kann es sich um ein gesondertes Bauteil handeln. In einem solchen Fall ist eine schwimmende Lagerung des Führungsstücks möglich. Das Führungsstück kann aber auch aus dem ersten Bauteil herausgeformt bzw. angeformt sein.

Nach den Merkmalen des Anspruchs 3 wird die am zweiten Bauteil ausgebildete Montageöffnung durch ein Durchgangsloch in einer dem zweiten Bauteil lagefixiert zugeordneten Scheibe gebildet. Zweckmäßigerweise ist die Scheibe auf der unteren Seite eines Durchgangslochs im zweiten Bauteil angeordnet. Bei der Montage schneidet die Verbindungsschraube das Innengewinde in diese Scheibe, und bei Bedarf auch in das Durchgangsloch des zweiten Bauteils.

Obwohl die Scheibe grundsätzlich auf unterschiedliche Weise am zweiten Bauteil festgelegt werden kann, erscheint eine schweißtechnische Festlegung vorteilhaft.

Diese Art der Bauteilverbindung hat einen hohen Automatisierungsstand bei guter Qualitätssicherheit.

In einer alternativen Ausführungsform kann die Montageöffnung im zweiten Bauteil auch durch einen Durchzug mit einem mündungsseitig angeformten Kragen gebildet sein, wie dies Anspruch 4 vorsieht. Der Durchzug weist einen definierten Innendurchmesser auf, der auf die Verbindungsschraube abgestimmt ist. In den Durchzug formt die Verbindungsschraube das sie widerlagernde Innengewinde beim Einschrauben selbst.

Die Erfindung ist nachfolgend anhand von in den Zeichnungen dargestellten Ausführungsbeispielen näher beschrieben. Es zeigen:
- Figur 1: im vertikalen Querschnitt eine Vorrichtung zum Verbinden von im Abstand zueinander anzuordnenden Bauteilen und
- Figur 2: ebenfalls im vertikalen Querschnitt eine weitere erfindungsgemäße Vorrichtung.

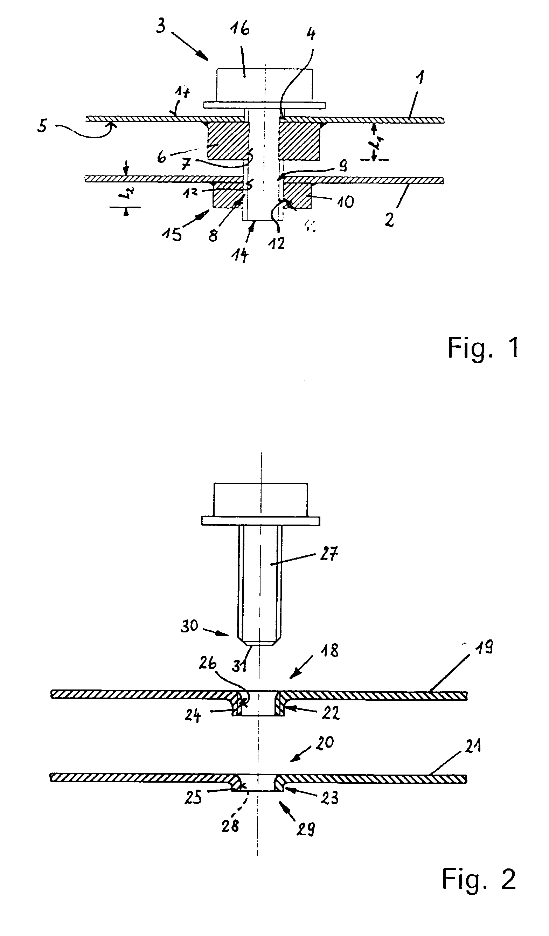

Die Figur 1 zeigt eine Vorrichtung, mit der zwei im Abstand zueinander liegende Bleche 1 und 2 mittels einer selbstschneidenden vibrationsfesten Verbindungsschraube 3 verbunden werden. Bei Blech 1 handelt es sich um einen Ausschnitt aus der A-Säule eines Kraftfahrzeuges. Das Blech 2 ist ein Montageträger.

Das obere Blech 1 weist ein Durchgangsloch 4 auf. Auf der Unterseite 5 ist eine Mutter 6 mit einem durchgehenden Innengewinde 7 angeschweißt.

Im unteren Blech 2 wird eine Montageöffnung 8 durch ein Durchgangsloch 9 mit einer darunter angeordneten Scheibe 10 gebildet. In der Scheibe 10 ist eine Öffnung 11 vorgesehen, deren Durchmesser so auf die Dicke der Verbindungsschraube 3 abgestimmt ist, daß diese bei der Verschraubung in die Montageöffnung 8 ein Innengewinde 12 schneidet. Hierbei wird die Zylindermantelfläche 13 der Montageöffnung 8 schraubenlinienförmig profiliert.

Bei der Montage wird die Verbindungsschraube 3 zunächst in die Mutter 6 am oberen Blech 1 eingeschraubt. Die Schraubenspitze 14 wird im Laufe des Montagevorgangs in die Montageöffnung 8 eingeführt und schneidet bei ihrer Fortführung das Innengewinde 12 in das untere Blech 2, wodurch letztendlich das Widerlager 15 für die Verbindungsschraube 3 gebildet wird.

Die Montage ist abgeschlossen, wenn der Schraubenkopf 16 auf der Oberseite 17 des Blechs 1 zur Anlage kommt. Die Klemmlänge l₁ der Mutter 6 und die Lasteinleitungshöhe l₂ des Widerlagers 15 sind so gewählt, daß einem Lösen der Verbindung entgegengewirkt wird.

Die in der Figur 2 dargestellte Vorrichtung entspricht funktionell derjenigen, wie anhand der Figur 1 beschrieben. Hier werden jedoch die Montageöffnungen 18 im oberen Blech 19 und die Montageöffnung 20 im unteren Blech 21 jeweils von einem Durchzug 22 bzw. 23 gebildet.

Der Durchzug 22 bzw. 23 ist umformtechnisch in Bildebene gesehen nach Art eines nach unten offenen Napfes aus dem Blech 19 bzw. 21 herausgebildet. Mündungsseitig ist dabei auf dem Umfang jeweils ein Kragen 24, 25 ausgebildet.

Im Durchzug 22 ist ein Innengewinde 26 vorgesehen. Bei der Montage wird die Verbindungsschraube 27 zunächst in den Durchzug 22 eingeschraubt. Bei der Fortführung des Montagevorgangs wird die Verbindungsschraube 27 im Durchzug 22 geführt. Dabei stützt sie sich am Innengewinde 26 ab und schneidet in den Durchzug 23 ein Innengewinde 28, wodurch ein Widerlager 29 für die Verbindungsschraube 17 gebildet wird.

Die Kraftübertragung erfolgt vom oberen Blech 19 durch die Verbindungsschraube 27 und das Innengewinde 28 in das untere Blech 21. Die Verbindungsschraube 27 ist vibrationsfest ausgeführt, so daß ein Lösen infolge von ruhenden oder schwingenden Betriebskräften vermieden wird.

Am Schraubenende 30 der Verbindungsschraube 27 ist zur Erleichterung der automatisierten Montage in Fertigungsstraßen eine Suchspitze 31 ausgebildet.

### Bezugszeichenaufstellung

- 1 -: Blech
- 2 -: Blech
- 3 -: Verbindungsschraube
- 4 -: Durchgangsloch
- 5 -: Unterseite v. 1
- 6 -: Mutter
- 7 -: Innengewinde
- 8 -: Montageöffnung
- 9 -: Durchgangsloch
- 10 -: Scheibe
- 11 -: Öffnung
- 12 -: Innengewinde
- 13 -: Zylindermantelfläche
- 14 -: Schraubenspitze
- 15 -: Widerlager f. 3
- 16 -: Schraubenkopf
- 17 -: Oberseite v. 1
- 18 -: Montageöffnung v. 17
- 19 -: Blech
- 20 -: Montageöffnung v. 19
- 21 -: Blech
- 22 -: Durchzug
- 23 -: Durchzug
- 24 -: Kragen
- 25 -: Kragen
- 26 -: Innengewinde
- 27 -: Verbindungsschraube
- 28 -: Innengewinde
- 29 -: Widerlager
- 30 -: Schraubenende
- 31 -: Suchspitze

- l₁ -: Klemmlänge v. 6
- l₂ -: Lasteinleitungshöhe v. 15

## Patentansprüche

1. Vorrichtung zum Verbinden eines ersten Bauteils (1, 19) mit einem im Abstand dazu anzuordnenden zweiten Bauteil (2, 21), mittels einer Montageöffnungen (8, 20) in beiden Bauteilen (1, 19; 2, 20) durchsetzenden Verbindungsschraube (3, 27) und dieser zugeordnetem Widerlager (15, 29), welches durch eine bei der Verschraubung hergestellte, schraubenlinienförmige Profilierung der Zylindermantelfläche der Montageöffnung (8, 20) am zweiten Bauteil (2, 21) gebildet ist, **dadurch gekennzeichnet,** daß dem ersten Bauteil (1, 19) ein mit einem Innengewinde (7, 26) versehenes Führungsstück (6, 22) für die Verbindungsschraube (3, 27) verdrehungssicher zugeordnet ist.

2. Vorrichtung nach Anspruch 1, **dadurch gekennzeichnet,** daß das Führungsstück (6, 22) dem ersten Bauteil (1, 19) lagefixiert zugeordnet ist.

3. Vorrichtung nach einem der Ansprüche 1 oder 2, **dadurch gekennzeichnet,** daß die Montageöffnung (8) durch ein Durchgangsloch (11) in einer dem zweiten Bauteil (2) lagefixiert zugeordneten Scheibe (10) gebildet ist.

4. Vorrichtung nach einem der Ansprüche 1 oder 2, **dadurch gekennzeichnet,** daß die Montageöffnung (20) im zweiten Bauteil (21) durch einen Durchzug (23) mit einem mündungsseitig ausgeformten, umfangsseitigen Kragen (25) gebildet ist.

## Claims

1. A device for connecting a first component (1, 19) to a second component (2, 21) which is to be disposed in spaced relationship thereto, by means of a connecting screw (3, 27) extending through assembly apertures (8, 20) in both components (1, 19; 2, 20), and an abutment (15, 29) associated with the said connecting screw, said abutment being formed on the second component (2, 21) by a helical profiling of the cylinder generatrix of the assembly aperture (8, 20), such profiling being produced during the screwing operation, characterised in that a guide member (6, 22) for the connecting screw (3, 27) is associated non-rotatably with the first component (1, 19), said guide member (6, 22) having an internal screwthread (7, 26).

2. A device according to claim 1, characterised in that the guide member (6, 22) is associated with the first component (1, 19) so as to be positionally fixed.

3. A device according to claim 1 or 2, characterised in that the assembly aperture (8) is formed by a through-hole (11) in a washer (10) associated with the second component (2) so as to be positionally fixed.

4. A device according to claim 1 or 2, characterised in that the assembly aperture (20) in the second component (21) is formed by a passage (23) having a peripheral collar (25) formed on the orifice side.

## Revendications

1. Dispositif pour la liaison d'un premier élément de construction (1, 19) avec un deuxième élément de construction (2, 21) disposé à une certaine distance de celui-ci, au moyen d'une vis de liaison (3, 27) traversant des ouvertures de montage (8, 20) dans les deux éléments de construction (1, 19 ; 2, 20) et un élément de contre-butée (15, 29) affecté à celle-ci qui par un profilage hélicoïdal produit lors du vissage, profilage de la surface du manteau de cylindre de l'ouverture de montage (8, 20) est formé sur le deuxième élément de construction (2, 21), caractérisé en ce qu'au premier élément de construction (1, 19) est affecté à un élément de guidage (6, 22) muni d'un filetage interne (7, 26) pour la vis de liaison (3, 27) de manière anti-torsion.

2. Dispositif selon la revendication 1, caractérisé en ce que le tronçon de guidage (6, 22) est affecté au premier élément de construction (1, 19) de façon fixe en position.

3. Dispositif selon l'une des revendications 1 ou 2, caractérisé en ce que l'ouverture de montage (8) est formée par un trou traversant (11) dans un disque (10) affecté au deuxième élément de construction (2) fixe en position.

4. Dispositif selon l'une des revendications 1 ou 2, caractérisé en ce que l'ouverture de montage (20) est formée dans le deuxième élément de construction (21) par une traverse (23) avec un collet (25) périphérique monté sur le côté de l'embouchure.
